# EUROPÄISCHE PATENTSCHRIFT

(11) **EP 0 833 270 B1**
(45) Veröffentlichungstag und Bekanntmachung des Hinweises auf die Patenterteilung: **23.03.2005**
(21) Anmeldenummer: 97114359.9
(22) Anmeldetag: 20.08.1997
(51) Int. Cl.: G06K 7/10

(54) **Verfahren und Vorrichtung zur Erfassung von auf potentiell grossflächigen Gegenständen aufgebrachten, optisch erfassbaren Informationen**
Method and device for detecting optically detectable informations being disposed potentially on objects with a great area
Procédé et dispositif de détection d'informations, détectables optiquement disposées sur des objets pouvant être de grande surface

(30) Priorität: 27.09.1996 DE 19639854
(43) Veröffentlichungstag der Anmeldung: 01.04.1998
(73) Patentinhaber: VITRONIC Dr.-Ing. Stein Bildverarbeitungssysteme GmbH, 65189 Wiesbaden (DE)
(72) Erfinder: Stein, Norbert, 65193 Wiesbaden (DE); Hoffmann, Burghard, Dipl.-Ing., 65232 Taunusstein (DE); Moreth, Richard, Dipl.-Ing., 64285 Darmstadt (DE)
(74) Vertreter: Weber, Dieter, Dr. Dipl.-Chem.

(56) Entgegenhaltungen:
- EP-A- 0 620 680
- BRUNELLE N R ET AL: "LINE SCAN VISION SYSTEM" AT & T TECHNICAL JOURNAL,US,AMERICAN TELEPHONE AND TELEGRAPH CO. NEW YORK, Bd. 65, Nr. 4, 1. Juli 1986 (1986-07-01), Seiten 58-65, XP000002006 ISSN: 8756-2324
- BYERLY M: "WHAT LINE SCAN VISION SYSTEMS CAN DO FOR YOU" I & CS - INDUSTRIAL AND PROCESS CONTROL MAGAZINE,US,CHILTON COMPANY. RADNOR, PENNSYLVANIA, Bd. 64, Nr. 5, 1. Mai 1991 (1991-05-01), Seiten 78,80-82, XP000232396 ISSN: 1074-2328
- BERMBACH R ET AL : "Zeilensensor überwacht bewegte Objekte" ELEKTRONIK, FRANZIS VERLAG GMBH. MÜNCHEN, DE , Bd. 35, Nr. 24, 28. November 1986 (1986-11-28), Seiten 99-102, XP000955339
- RAINER BERMBACH ET AL: "Industrial image processing system allows parallel computing on sensor data" PROCEEDINGS OF THE SPIE,US,SPIE, BELLINGHAM, VA, Bd. 804, 1. April 1987 (1987-04-01), Seiten 269-277, XP002088675

## Beschreibung

Die vorliegende Erfindung betrifft ein Verfahren und eine Vorrichtung zur Erfassung von auf potentiell großflächigen Gegenständen aufgebrachten, optisch erfaßbaren Informationen. Bei dem entsprechenden Verfahren wird ein Gegenstand mit einer potentiell großen Oberfläche in das Sichtfeld einer Videokamera gebracht und die im Sichtfeld der Videokamera erkennbaren Informationen werden zwecks Identifikation und/oder Zuordnung des Gegenstandes in ein Rechnersystem eingegeben. Die entsprechende Vorrichtung weist daher eine Videokamera und eine Eingabevorrichtung für die Informationen aus dem von der Videokamera erfaßten Gesichtsfeld auf. Dabei beanspruchen die optisch erfaßbaren Informationen auf der Oberfläche eines Gegenstandes oft nur einen kleinen Teil von dessen Fläche, insbesondere dann, wenn es sich um einen sehr großflächigen Gegenstand handelt. Im Falle der vorliegenden Erfindung ist es nicht zwingend, daß ein Gegenstand, von dessen Oberfläche Informationen erfaßt werden sollen, tatsächlich eine große (im allgemeinen ebene) Oberfläche aufweist, sondern diese Fläche kann im Einzelfall auch relativ klein sein, wobei jedoch das Verfahren und die Vorrichtung dafür ausgelegt sind, die Informationen im wesentlichen unbhängig von der Größe der Fläche und selbst dann gut und genau zu erfassen, wenn der betreffende Gegenstand eine sehr große Oberfläche aufweist, während die entsprechenden Informationen möglicherweise nur einen kleinen Teil dieser Oberfläche beanspruchen. Mit "Oberfläche" wird dabei im Sinne der vorliegenden Beschreibung im allgemeinen die der Kamera direkt zugewandte Fläche eines Gegenstandes bezeichnet, deren Abstand von der Kamera innerhalb der Schärfentiefe der Kameraoptik varieren kann und die gegebenenfalls auch uneben, zum Beispiel mehr oder weniger gewellt, sein kann.

Ein typisches Beispiel für entsprechende Verfahren und Vorrichtungen liefert eine Paketverteilanlage. In einer Paketverteilanlage werden Pakete der unterschiedlichsten Größe auf Transportbändern angeliefert, wobei die Transportbänder im allgemeinen dafür ausgelegt sind, Pakete bis zu einer vorgegebenen Maximalgröße aufzunehmen, ohne daß die Pakete notwendigerweise alle die Maximalgröße haben müssen. Die vorliegende Erfindung soll jedoch nicht auf Paketverteilanlagen beschränkt sein, sondern kann auch in Produktionsprozessen für Sortier-und Verteilanlagen oder dergleichen verwendet werden. Die folgende Beschreibung nimmt jedoch der besseren Verständlichkeit wegen vor allem auf das konkrete Beispiel einer Paketverteilanlage Bezug. Im Stand der Technik sind Verfahren und Vorrichtungen der vorstehend beschriebenen Art nur mit ganz bestimmten Einschränkungen bekannt. Herkömmliche Videokameras sind nämlich nicht in der Lage, großflächige Gegenstände mit einer genügenden Auflösung vollständig zu erfassen, um die gegebenenfalls nur auf einem sehr kleinen Bereich des großflächigen Gegenstandes aufgebrachten Informationen noch hinreichend deutlich, d.h. mit der notwendigen Auflösung, erkennen zu können.

Soweit daher in entsprechenden Anlagen überhaupt Videokameras Verwendung gefunden haben, war dies bisher auf Anwendungsfälle beschränkt, in denen sichergestellt war, daß der Oberflächenausschnitt eines Gegenstandes, der die zur Identifikation und Zuordnung des Gegenstandes notwendigen Informationen enthielt, immer einen vorgegebenes Sichtfeld durchlief, welches im Vergleich zu der der Kamera zugewandten, gesamten Oberfläche des Gegenstandes relativ klein sein konnte. Konkret wurde also das Verfahren nur für Standardpakete angewendet, welche einen Adressaufkleber oder dergleichen immer im selben Bereich des Paketes hatten, wobei die Pakete dementsprechend auch immer in derselben Ausrichtung und Position auf einem Transportband oder dergleichen angeordnet werden mußten. Ein solches Verfahren ist noch brauchbar zum Beispiel für Versandhäuser, welche Pakete in Standardgrößen und mit einer standardisierten Aufmachung versenden, so daß Adressaufkleber tatsächlich immer dieselbe Größe und Anordnung auf einem Paket haben. Dabei können außerdem jeweils Pakete einer einzelnen Größe auf je einem Förderband angeordnet werden, so daß die Kamera auch immer denselben Abstand zur Oberfläche des Paketes hat. Diese herkömmlichen Verfahren sind jedoch nicht mehr anwendbar für die Post oder andere kommerzielle Kurierdienste, die Pakete von Jedermann oder jedenfalls unterschiedlichen Kunden entgegennehmen und an eine Zieladresse befördern. Derartige Pakete sind allenfalls insoweit standardisiert, als sie eine vorgegebene Maximalgröße nicht überschreiten dürfen. Ein verbreiteter Standard ist zum Beispiel eine maximale Höhe und Breite von 900 mm, wobei die Länge unter Umständen dieses Maß noch übersteigen kann. Im allgemeinen haben derartige Pakete Quaderform und eine ebene Oberfläche, auf welcher Adressinformationen, Informationen über die Handhabung des Paketes oder den Inhalt (Bruchgefahr, Ausrichtung nach oben bei Transport ader Lagerung) und die Art der Beförderung (zum Beispiel Expressgut) enthalten sind. Außerdem können auch noch Angaben über den Absender auf der Paketoberfläche aufgebracht sein. Weder die Größe noch die Anordnung all dieser Informationen auf der Paketoberfläche sind eindeutig festgelegt. Ein Teil dieser Informationen oder auch Zusatzinformationen können außerdem in Form eines sogenannten Strichcodes auf der Paketoberfläche aufgebracht sein.

Herkömmlich wurden für derartige Pakete Verfahren und Verteilanlagen benutzt, bei welchen eine neben einem entsprechenden Förderband stehende Person diese Pakete unmittelbar in Augenschein nahm und die auf dem Paket aufgebrachten Informationen unmittelbar in ein neben dem Förderband stehendes Terminal oder dergleichen eingab, wobei zusätzlich noch ein Strichcodeleser Verwendung finden konnte.

In dem Artikel RAINER BERMBACH ET AL: "Industrial image processing system allows parallel computing on sensor data" PROCEEDINGS OF THE SPIE,US,SPIE, BELLINGHAM, VA, Bd. 804, 1. April 1987 (1987-04-01), Seiten 269-277 ist ein System zur Bilderfassung und -auswertung in einem Mehrprozessorsystem beschrieben. Dabei weist der Rechner eine Hauptplatine und drei Nebenplatinen auf, die von der Hauptplatine mitverwaltet werden. Das System ermöglicht die parallele Verarbeitung der Bilddaten von vier Sensoren mit nur einem Rechner, wobei jeder Sensor mit jeweils einer Platine bzw. einem Prozessor des Systems verbunden ist. Die zu erfassenden Gegenstände werden mittels einer Transportvorrichtung unter den hochauflösenden Zeitenkameras hindurch transportiert. Die unabhängigen Ansprüche sind gegen dieses Dokument abgegrenzt.

Ausgehend von diesem Stand der Technik liegt der vorliegenden Erfindung die Aufgabe zugrunde, ein Verfahren und eine Vorrichtung der eingangs genannten Art zu schaffen, welche auch in Situationen, in welchen auf potentiell großen Oberflächen die in eine Rechnersystem zu übernehmenden Informationen in beliebigen Bereichen der Oberfläche angeordnet sein können, eine Fernerfassung und vorzugsweise sogar eine automatische Erfassung dieser Informationen ermöglichen.

Hinsichtlich des eingangs definierten Verfahrens wird diese Aufgabe durch die Merkmale des Anspruchs 1 gelöst.

Je nach Anforderung könnte die Auflösung zwischen den Zeilen durchaus um einen Faktor zwischen 1 und 10 von der Auflösung innerhalb der Zeilen abweichen, bevorzugt ist jedoch eine Ausgestaltung des erfindungsgemäßen Verfahrens, bei welcher die Auflösung in beiden Richtungen in etwa gleich ist. Dabei ist insbesondere zu berücksichtigen, daß auch die Ausrichtung der Informationen auf der Oberfläche des Gegenstandes nicht festgelegt ist, so daß eine gewisse, minimale Auflösung in jeder Richtung vorhanden sein muß. Aufgrund der Verwendung einer hochauflösenden Zeilenkamera ist es möglich, auch auf sehr großflächigen Gegenständen, die zum Beispiel eine Fläche von 900 x 1000 mm² haben, einen Ausschnitt von nur 100 x 100 mm² in genügender Auflösung darzustellen, um auf dieser Fläche aufgebrachte Informationen, zum Beispiel Adressbeschriftungen in normaler oder auch in feiner Schriftgröße, ablesen und eingeben zu können.

Die Begriffe "ablesen" und "eingeben" umfassen dabei sowohl das Ablesen und Eingeben durch eine Person, als auch ein maschinelles, automatisches Ablesen, welches gegebenenfalls nur durch eine Person kontrolliert und bestätigt wird.

Mit Abildungszeile oder Abbildungslinie ist im Sinne der vorliegenden Beschreibung eine Linie bzw. Reihe von Punkten bzw. kleinen Flächen auf der Oberfläche des betreffenden Gegenstandes gemeint die ein monentanes Gesichtsfeld der Zeilenkamera bilden, wogegen der Begriff Bildzeile die korrespondierende Reihe von Bildpunkten bzw. -Flächen auf dem Bild des Gegenstandes bezeichnet, die auf einem Terminal oder einem anderen Darstellungsmedium wiedergegeben oder in einem Speicher in Form digitalisierter Daten abgelegt ist.

Bevorzugt ist die Verwendung einer Zeilenkamera mit mehr als 1000, vorzugsweise mehr als 3000 und insbesondere etwa 5000 bis 7000 Bildpunkten entlang der Zeile. Wie man leicht errechnen kann, ergeben 5000 Bildpunkte entlang einer Abbildungszeile von zum Beispiel 1000 mm eine Auflösung von 0,2 mm. Dies reicht für herkömmliche Beschriftungen bei weitem aus und der Fachmann erkennt, daß ein entsprechendes Verfahren auch mit einer Auflösung von zum Beispiel 2000 Bildpunkten auf 1 Meter bei hinreichend großer Schrift noch mit akzeptabler Genauigkeit zu betreiben wäre. Bevorzugt ist jedoch eine maximale Zeilenauflösung von 7000 Punkten.

Der Objektabstand sollte vorzugsweise mehr als das Zweifache und insbesondere mehr als das Dreifache der maximalen Breite der zu erfassenden Gegenstände betragen. Dabei ist dieser Objektabstand entlang der - nicht notwendigerweise gerade verlaufenden - optischen Strahlenachse des Systems zu messen. Dieser Strahlengang kann dabei auch durch einen oder mehrere Spiegel, eventuell auch durch Lichtleiter oder dergleichen umgelenkt werden, wenn dies zum Beispiel zur Begrenzung der Bauhöhe des Gesamtsystems notwendig oder zweckmäßig erscheint. Der relativ große Objektabstand stellt dabei eine hinreichende Schärfentiefe der Kameraoptik sicher, die auf jeden Fall den Bereich umfaßt, innerhalb dessen der Abstand der Objektoberfläche von der Kameraoptik während des Durchlaufs durch die Abbildungsebene variieren kann. Dabei ist insbesondere auch zu berücksichtigen, daß wegen der potentiell relativ großen Fläche und der maximalen Länge einer Abbildungszeile von zum Beispiel 1 m die zentralen Abbildungspunkte dieser Zeile der Kameraoptik deutlich näher liegen als die Abbildungspunkte an den Enden der Zeile (wenn die Kamera symmetrisch bezüglich des Abbildungsmittelpunktes angeordnet ist). Diese relativen Unterschiede werden aufgrund des relativ großen Objektabstandes der Kamera entsprechend vermindert. Außerdem ist zu beachten, daß die einzelnen Gegenstände eine sehr unterschiedliche Höhe haben können. Im Falle der als Beispiel betrachteten Paketverteilungsanlage können die Höhenunterschiede zwischen verschiedenen Paketen zum Beispiel bis zu 800 mm betragen. Um sowohl den niedrigsten als auch den höchsten Gegenstand mit hinreichender Schärfe erfassen zu können, ist zum einen eine automatische Nachfokussierung vorgesehen, wobei jedoch auch hier der große Objektabstand der Zeilenkamera die Fokussierung über den entsprechend der Höhe der Gegenstände variierenden Abstandsbereich ohne weiteres ermöglicht

Bevorzugt ist dabei eine Variante des erfindungsgemäßen Verfahrens, wonach zur automatischen Fokussierung der Bildsensor in der Zeilenkamera relativ zur Kameraoptik verschoben wird. Konkret kann die Kameraoptik bzw. eine Abbildungslinse festgehalten werden und der Abstand des Zeilensensors in der Zeilenkamera von dieser Linse oder Optik wird entsprechend dem Abstand der Objektoberfläche variiert. Dabei reicht ein Hub in der Größenordnung von 1 - 2 mm aus, um bei einem Objektabstand von mindestens 3 m Höhendifferenzen von 800 mm in der Bildschärfe auszugleichen.

Eine wichtige Rolle bei einer genauen Bilderfassung spielt im Rahmen der vorliegenden Erfindung auch eine geeignet ausgestaltete und angepaßte Beleuchtung. Dabei kommt es der vorliegenden Erfindung zugute, daß sie eine Zeilenkamera verwendet, die jeweils nur einen sehr schmalen Streifen aus der Oberfläche eines Gegenstandes erfaßt, wobei das Gesamtbild der Oberfläche des Gegenstandes aus einer Vielzahl aufeinanderfolgender, paralleler Streifen zusammengesetzt wird, die sich aus zeitlich nacheinander aufgenommenen Bildzeilen ergeben, wenn der Gegenstand durch die Abbildungsebene hindurchbewegt wird, während die Kamera mit einer vorgegebenen Frequenz nacheinander die einzelnen Zeilen aufnimmt und die Bilddaten entsprechend zwischenspeichert. Im Gegensatz zu herkömmlichen Verfahren muß dann nicht die gesamte Oberfläche des Gegenstandes bzw. die gesamte, Informationen enthaltende Teilfläche desselben gleichmäßig ausgeleuchtetwerden, sondern es reicht aus, wenn die Gegenstandsoberfläche entlang der schmalen Zeile homogen ausgeleuchtet ist, die sich als Schnittlinie der Gegenstandsoberfläche und der Abbildungsebene ergibt Die Abbildungsebene wird dabei aufgespannt durch die optische Achse der Kamera und die Zeilenrichtung.

Erfindungsgemäß ist vorgesehen, daß das Licht der Beleuchtungseinrichtung derart fokussiert wird, daß eine Ebene maximaler Intensität die Abbildungsebene nahe der Oberfläche der Vorschubeinrichtung bzw. im Bereich der Oberfläche eines Gegenstandes mit maximalem Abstand zu Kamera schneidet, d.h. die Oberflächen der niedrigsten Gegenstände, die den weitesten Abstand zur Kamera haben, werden in der Abbildungsebene und damit entlang der Abbildungslinie mit maximaler Intensität beleuchtet. Bei entsprechend höheren und näher an der Kamera liegenden Oberflächen nimmt die Beleuchtungsintensität in der Abbildungsebene entsprechend ab, was jedoch durch den kürzeren Abstand der Kamera zu der Gegenstandsoberfläche kompensiert wird, so daß die Abbildungslinie im wesentlichen die gleiche scheinbare Helligkeit hat, wie im Falle der weiter entfernten, intensiver beleuchteten Abbildungslinie.

Ein weiterer, für die Beleuchtung zu berücksichtigender Aspekt liegt gegebenenfalls in der Änderung der Abtastfrequenz, die vorzugsweise mit der Höhe der Gegenstandsoberfläche, in der Weise zunimmt, daß sich in Transportrichtung, also senkrecht zur Abbildungszeile bzw Bildzeile, dieselbe Auflösung ergibt wie innerhalb der Zeile. Allerdings gilt dies nur, wenn sich bei einer näher zur Kamera liegenden Gegenstandsoberfläche die Auflösung in Zeilenrichtung ändert, d. h. wenn für eine weiter entfernt liegende Fläche nicht die volle Zeilenlänge des Bildsensors und damit die volle Zeilenauflösung genutzt werden kann, so daß näher gelegene Flächen mit einer höheren Auflösung erfasst werden. Dies trifft immer dann zu, wenn die Kamera nicht über eine Zoom-Optik verfügt, also mit konstanter Brennweite arbeitet. Diese Erhöhung der Abtastfrequenz reduziert ebenfalls die scheinbare Helligkeit des Bildes näher liegender Flächen, kompensiert aber nicht vollständig die Helligkeitszunahme durch die entsprechende Verringerung des Abstandes zur Lichtquelle, wenn deren Beleuchtungsintensität nicht in der vorgesehenen Weise variieren würde. Allerdings wird der erforderliche Intensitätsverlauf der Beleuchtung, gesehen in Richtung senkrecht zur Ebene maximaler Intensität, etwas abgeflacht.

Die Ebene der maximalen Intensität der Beleuchtung hat dabei vorzugsweise einen Neigungswinkel von mindestens 0°, vorzugsweise von etwa 10°bis 30° und höchstens etwa 50° relativ zu der Abbildungsebene, wobei die Abbildungsebene vorzugsweise in die gleiche Richtung wie die erwähnte Beleuchtungsebene gegenüber einer Senkrechten zu der Transportoberfläche geneigt ist. Die Abbildungsebene kann gegenüber einer Senkrechten zur Transportebene zum Beispiel um 20° geneigt sein, wobei die Schnittlinie zwischen Abbildungsebene und Transportebene im allgemeinen senkrecht zur Transportrichtung verläuft. Unabhängig von der Neigung kann allerdings die Abbildungsebene auch um eine Senkrechte zur Transportebene noch um einen kleinen Winkel verdreht sein, so daß die erwähnte Schnittlinie nicht mehr senkrecht zur Transportrichtung verläuft.

Die gleichzeitige Neigung von Abbildungsebene und Beleuchtungsebene dient vor allem der Verhinderung von durch die Kamera erfassten Reflexen, wie sie bei spiegelnden Flächen, wie zum Beispiel Folien und insbesondere auch leicht gewellten Folien auf der Gegenstandsoberfläche auftreten könnten. Derartige Reflexe werden bei der bevorzugten, geneigten Anordnung nicht bzw. in weniger störender Form durch die Kamera erfasst.

Bevorzugt ist eine Ausgestaltung des Verfahrens, bei welchem mehrere Zeilenkameras an bzw. über mehreren Vorschubeinrichtungen die Oberflächen von darauf transportierten Gegenständen erfassen, wobei die Zeilenkameras über eine Speichereinrichtung und ein Netzwerk mit einem Leitrechner sowie mit Eingabeterminals verbunden sind, an welchen gegebenenfalls die abgebildeten Gegenstandsoberflächen wiedergegeben und die daraus zu entnehmenden Informationen eingegeben werden.

Insbesondere ist die Verwendung des erfindungsgemäßen Verfahrens für eine Paketverteilanlage vorgesehen.

Hinsichtlich der eingangs genannten Vorrichtung wird die der Erfindung zugrunde liegende Aufgabe durch die Merkmale des Anspruchs 12 gelöst.

Die Transporteinrichtung ist vorzugsweise ein Förderband, welches die Gegenstände mindestens im Bereich der Zeilenkamera weitgehend erschütterungsfrei transportiert.

Dabei ist die Vorrichtung vorzugsweise so ausgestaltet, daß die Bildwiederholfrequenz der Zeilenkamera und/oder die Transportgeschwindigkeit der Vorschubeinrichtung aufeinander abgestimmt steuerbar sind. Die Zeilenwiederholfrequenz der Zeilenkamera ergibt in Verbindung mit der Transportgeschwindigkeit der Vorschubeinrichtung den Abstand aufeinanderfolgender Abbildungszeilen und damit auch den Abstand und die Auflösung der entsprechend darzustellenden Bildzeilen.

Wie bereits erwähnt, sollte die Zeilenkamera bei einer Erfassungsbreite von 900 mm einen Abstand von mehr als 2 m von der Oberfläche der abzubildenden Gegenstände haben. Vorzugsweise ist die Kamera etwa 4 m oberhalb der Oberfläche eines Transportbandes für die Gegenstände bzw in einem entsprechenden optischen Abstand angeordnet.

Weiterhin ist vorgesehen, daß die Zeilenkamera so ausgerichtet ist, daß ihre oben definierte Abbildungsebene etwas in Richtung der Bandebene geneigt ausgerichet ist.

Die entsprechende Beleuchtungseinrichtung hat vorzugsweise eine Lichtquelle, deren Licht durch eine Fokussiereinrichtung derart gebündelt wird, daß eine Ebene (bei gleichbleibendem Abstand im wesentlichen konstanter) maximaler Lichtintensität sowohl zur Ebene der Vorschubeinrichtung als auch zu der Abbildungsebene der Zeilenkamera geneigt verläuft. Die Lichtquelle kann zum Beispiel durch eine Reihe, im einfachsten Fall zwei, entlang einer Linie (parallel zur Abblldungslinie) angeordnete Punktstrahler gebildet werden, die jeweils eine eigene Fokussiereinrichtung haben, so daß die überlappenden Lichtintensitäten der Reihe von Punktstrahlem der Uchtintensitätsverteilung einer homogenen, linienförmigen Lichtquelle relativ nahe kommen. Dabei wird durch die Fokussiereinrichtungen das Licht zu einer Seite hin gebündelt, wobei sich eine Ebene maximaler Lichtintensität ergibt, d.h. eine Ebene, welche einerseits von der linienförmigen Lichtquelle bzw. der Reihe von Punktstrahlern und andererseits von dem Richtungspfeil aufgespannt wird, in welcher die maximale Lichtintensität abgestrahlt wird. Die Beleuchtungseinrichtung bzw. deren Fokussiereinrichtung mit der Lichtquelle werden dann vorzugsweise so angeordnet, daß die erwähnte Ebene maximaler Lichtintensität die oben definierte Abbildungsebene in etwa auf der Oberfläche der Transporteinrichtung oder etwas darüber schneidet, nämlich in Höhe der Oberfläche eines auf der Transporteinrichtung transportierten Gegenstandes mit minimaler Höhe.

Konkret bedeutet dies, daß der Gegenstand durch die Beleuchtungseinrichtung derart beleuchtet ist, daß sich quer über den Gegenstand hinweglaufend eine Linie maximaler Beleuchtungsintensität ergibt, die zu beiden Seiten hin, d.h. zum vorausgehenden und zum nachlaufenden Ende des Gegenstandes hin, allmählich abnimmt. Dabei trifft bei den Gegenständen mit niedrigster Höhe, bei welchen also die abzubildende Oberfläche den maximalen Abstand zur Zeilenkamera hat, diese Linie maximaler Beleuchtungsintensität genau mit der von der Zeilenkamera erfaßten Abbildungszeile zusammen. Wegen der relativen Neigung der Ebene maximaler Lichtintensität relativ zur Abbildungsebene verläuft jedoch bei höheren Gegenständen die Abbildungszeile im Abstand zu der Linie maximaler Beleuchtungsintensität und parallel hierzu.

Dabei werden die Neigung der Ebene maximaler Lichtintensität und die Intensitätsverteilung zweckmäßigerweise so eingestellt, daß die geringere Beleuchtungsstärke der Abbildungszeilen bei höheren Gegenständen durch den kürzeren Kamerabstand derart kompensiert wird, daß sich für alle unterschiedlich hohen Gegenstände in etwa die gleiche scheinbare Helligkeit der Abbildungslinie bzw. -zeile ergibt. Der Winkel zwischen Abbildungsebene und Ebene maximaler Lichtintensität beträgt dabei vorzugsweise mindestens 10° und höchstens 50°, wobei dieser Neigungswinkel, ebenso wie die Neigung der Abbildungsebene in die gleiche Richtung, dazu beiträgt, daß keine störenden Reflexe von reflektierenden Oberflächenbereichen, wie zum Beispiel Abdeckfolien und dergleichen, in die Zeilenkamera gerichtet werden.

In der bevorzugten Ausführungsform weist die erfindungsgemäße Vorrichtung mehrere getrennte Vorschubeinrichtungen auf, über welchen jeweils eine eigene Zeilenkamera mit angeschlossenem Sensorrechner angeordnet ist, der wiederum über ein schnelles Datennetzwerk mit mehreren Bearbeitungsterminals verbunden ist. Wegen der hohen Auflösung (bis zu 7000 Bildpunkte pro Zeile) und bei einer Zeilenwiederholfrequenz in der Größenordnung von bis zu 6000 Hertz fallen sehr große Datenmengen an, so daß in der bevorzugten Ausführungsform ein Datennetzwerk hoher Leistungsfähigkeit Verwendung findet, wie zum Beispiel ein 100 Mbit Ethernet mit einem sogenannten "Switching Hub" als Schaltknoten.

Mit einer solchen Vorrichtung ist es möglich, bei Verwendung mehrerer Zeilenkameras und mehrerer Terminals jeden der Sensorrechner der Zeilenkameras mit jedem beliebigen der Terminals zu verbinden. Vorzugsweise ist dabei die Anzahl der Eingabeterminals unabhängig von der Anzahl der Zeilenkameras. Dieses Merkmal ist deshalb vorgesehen, weil zum Beispiel die Erfassung und manuelle Eingabe der Informationssdaten durch einen Benutzer länger dauert als die Erfassung der Oberfläche eines Gegenstandes mit Hilfe der Zeilenkamera, so daß die Bilder der Zeilenkameras zwischengespeichert werden und jeweils von einem der Terminals zur Bearbeitung abgerufen werden. Die geringere Bildbearbeitungsgeschwindigkeit an den Terminals im Vergleich zur Erfassung der Bilder durch die Zeilenkameras wird dabei durch eine größere Anzahl von Terminals ausgeglichen. Dabei werden die einzelnen, erfaßten Bilder in der Reihenfolge ihrer Erfassung zwischengespeichert und in genau dieser Reihenfolge einzeln an die Terminals weitergegeben, und zwar in der Reihenfolge, wie sich die einzelnen Terminals als frei für die Bearbeitung eines neuen Bildes melden.

Umgekehrt kann jedoch die automatische Erfassung und Identifikation der Bildinformationen eventuell schneller ablaufen als das Erfassen der Gegenstandsoberflächen, so daß in einem solchen Fall die Zahl der Bearbeitungsterminals sogar kleiner sein könnte als die der Kameras und der zugehörigen Sensorrechner. Je nach Automatisationsgrad und Korrektur- und Überwachungserfordernissen durch Bedienpersonal kann das Verhältnis der Zahl von Terminals zu der der Kameras entsprechend variieren. Bei eindeutiger automatischer Identifizierbarkeit der Bildinformation kann die Auswertung direkt im Sensorrechner durchgeführt werden und die (Codier-)Terminals können dann entfallen.

Dabei sind an den Terminals Einrichtungen vorgesehen, welche eine Ausschnittvergrößerung der zwischengespeicherten Bilder erlauben. Darüberhinaus ist es zweckmäßig, wenn die erfaßten Bilder von der Kameraelektronik oder aber von dem lokalen Sensorrechner komprimiert werden, so daß große homogene Bildflächen ohne Information nur geringen Speicherplatz beanspruchen, während von den kontrastreichen Flächen, welche die einzugebenden Informationen enthalten, entsprechend größere Datenmengen gespeichert werden.

Jedes Terminal weist neben den Einrichtungen zum Herstellen einer Ausschnittvergrößerung vorzugsweise auch Einrichtungen auf, um das Bild oder einen Bildausschnitt zu drehen, vorzugsweise um 90°, um 180° oder um 270°, gegebenenfalls auch durch stufenweises Verdrehen um diskrete Winkelschritte.

Außerdem hat jedes Terminal Einrichtungen für eine manuelle Eingabe von Informationsdaten, die von dem Bildschirm des Terminals abgelesen werden.

Besonders bevorzugt ist jedoch eine Ausgestaltung der erfindungsgemäßen Vorrichtung, bei welcher auch Einrichtungen zum automatischen Erfassen der Informationsdaten sowie zum Anzeigen dieser automatisch erfaßten Daten vorgesehen sind. Beispielsweise könnte die Vorrichtung neben einem Strich bzw. Barcodeleser auch einen Klarschriftleser aufweisen, wobei mit Hilfe eines geeigneten Programms die als digitalisiertes Bild im Rechner gespeicherte Oberfläche des Gegenstandes nach Oberflächenbereichen abgesucht wird, welche offenbar die gewünschten Informationen enthalten, die dann von einer Klarschriftlesesoftware in entsprechende digitale Symbole umgesetzt werden und wobei das Ergebnis anschließend auf dem Terminal, zum Beispiel in einem separaten Fenster auf einem Bildschirm, angezeigt wird. Eine Bedienperson braucht dann lediglich noch zu überprüfen, ob die maschinell erfaßten und in dem Fenster angezeigten Daten mit den gleichfalls auf dem Bildschirm abgebildeten sichtbaren Informationen auf der Paketoberfläche übereinstimmen und bestätigt dies gegebenenfalls oder nimmt mit Hilfe der Eingabeeinrichtung eine notwendige Korrektur vor. Auf diese Weise kann man zum Beispiel sicherstellen, daß beim maschinellen Ablesen nicht Absender und Empfänger verwechselt werden oder es können Lesefehler des Klarschriftlesers korrigiert werden. Bei eindeutiger Indentifikation kann die Visusalisierung gegebenenfalls auch entfallen.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine Übersicht über ein Netzwerk zwischen Zeilenkameras, Eingabeterminals und einem Leitrechner, wie es zum Beispiel für eine Paketverteilungsanlage Verwendung finden kann,
- Figur 2: die Draufsicht auf eine Paketoberfläche mit Informationen auf einem Teil dieser Fläche,
- Figur 3: einen Schnitt durch eine schematische Ansicht einer Videokamera in der Abbildungsebene über einem Transportband,
- Figur 4: eine perspektivische Ansicht einer Gegenstandserfassungseinrichtung,
- Figur 5: in perspektivischer Darstellung die relative Anordnung von Kamera und Beleuchtungssystem und
- Figur 6: ein Schema zur Erläuterung der unterschiedlichen Beleuchtungsintensitäten bei unterschiedlichen Oberflächenhöhen.

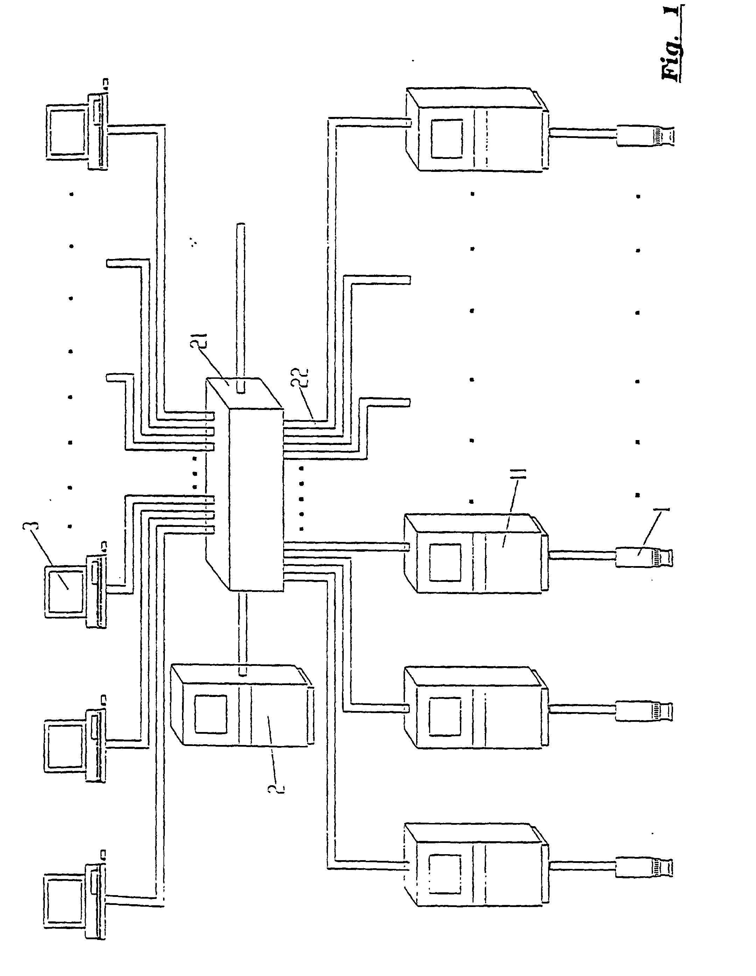

Man erkennt in Figur 1 eine Reihe von Zeilenkameras, von denen konkret nur vier dargestellt sind. Jede der Zeilenkameras enthält eine Sensoreinheit, eine Autofokuseinrichtung und einen Sensorrechner 11, sowie Einrichtungen für die Steuerung der Sensoren, Einrichtungen für die Bildaufbereitung, Bildverarbeitung und für die Kommunikation mit einem Leitrechner 2 und mit Eingabeterminals 3, wobei diese Aufgaben mindestens teilweise durch den Sensorrechner 11 übernommen werden. Das Netzwerk ist z. B. ein sogenanntes schnelles Ethernet mit einer Übertragungsgeschwindigkeit von 100 Mbit pro Sekunde. Einen wesentlichen Teil des Netzwerkes 22 bildet ein Schaltknoten 21, der in der Fachsprache "Switching Hub" genannt wird und der von dem Leitrechner 2 gesteuert wird und es ermöglicht, jeden der Sensorrechner 11 mit jedem der Terminals 3 zu verbinden, woraufhin dann jedes der Terminals 3 auf den Bildspeicher Zugriff hat bzw. vom Leitrechner 2 über den Switching Hub 21 und das Netzwerk 22 die entsprechenden Bilddaten übermittelt bekommt. Die einzelnen von den Kameras 1 erfaßten Oberflächen werden dann also als mindestens teilweise komprimierte Bilddaten in einem Zwischenspeicher im Sensorrechner abgelegt und werden durch den Leitrechner 2 in derselben Reihenfolge an eines der Terminals weitergegeben, sobald sich ein solches Terminal 3 als bereit für die Bearbeitung eines neuen Bildes meldet. Der Sensorrechner 11 meldet jede vollständige Erfassung des Bildes einer Oberfläche 9 an den Leitrechner 2, der daraufhin die Bilder in entsprechender Reihenfolge an die Terminals weiterleitet. Auf dem Bildschirm des Terminals 3 erscheint dann zum Beispiel die Gesamtoberfläche eines Paketes und per Mausklick oder mit anderen Steuerungseinrichtungen wählt der Benutzer des Terminals dann den Bereich der Oberfläche des Paketes aus, welcher die gewünschten Informationen enthält.

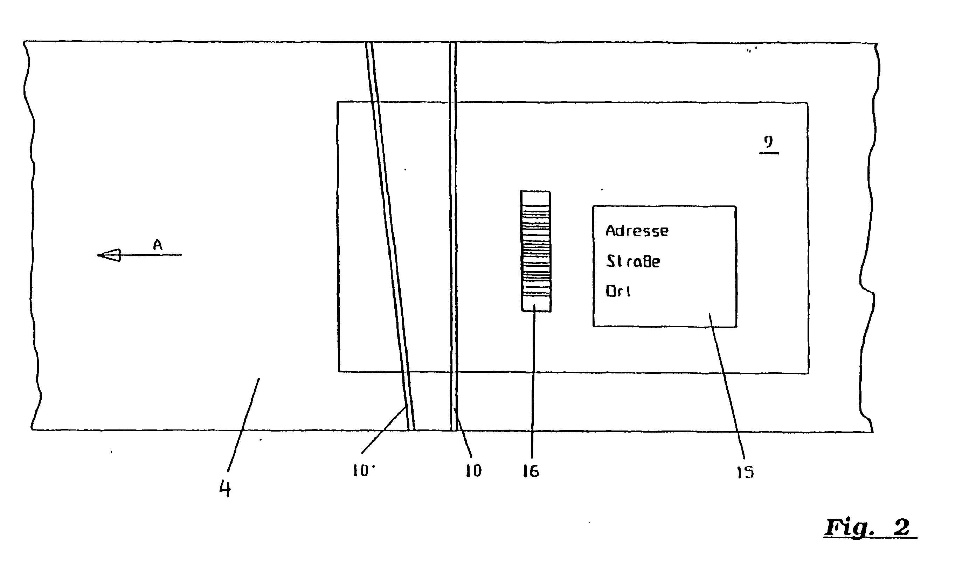

In Figur 2 ist eine entsprechende Oberfläche 9 eines Paketes mit einem Adressaufkleber 15 und einem Barcodefeld 16 dargestellt. Das Barcodefeld kann von einem Barcodeleseprogramm automatisch gesucht und gelesen werden. Das Adressfeld 15 kann bei Bedarf vergrößert auf dem Bildschirm des Terminals wiedergegeben und die Adressinformationen können von dem Benutzer über eine Tastatur in das System eingegeben werden. Dabei wird auch das Transportband 4 identifiziert, auf welchem sich das betreffende Paket befindet und gegebenenfalls werden auch die dem Barcode 16 zu entnehmenden Informationen in Klarschrift wiedergegeben. In Figur 2 sind noch die Schnittlinien zweier verschiedener Abbildungssebenen 10 bzw. 10' mit der Paketoberfläche 9 wiedergegeben. Man erkennt daran, daß die Abbildungsebene, welche definiert wird durch die Zeilenrichtung und die optische Achse der Kamera, die Transportebene exakt senkrecht zur Vorschubrichtung schneiden, als auch um die optische Achse bzw. eine Senkrechte zur Transportebene um einen Winkel verdreht sein kann. Es ist auch möglich, die Oberflächen gleichzeitig von zwei Kameras erfassen zu lassen, von welchen eine eine das Transportband senkrecht zur Vorschubrichtung schneidende Abbildungsebene 10 und die andere eine um die optische Achse relativ zur Ebene 10 verdrehte Abbildungsebene 10' hat

Die beiden Kameras sind außerdem mit ihren optischen Achsen auch gegenüber einer Senkrechten zur Oberfläche 9 bzw. zur Oberfläche des Transportbandes 4 geneigt Auf diese Weise kann man verhindern, daß eventuell auftretende Lichtreflexe in die Kamera gelenkt werden.

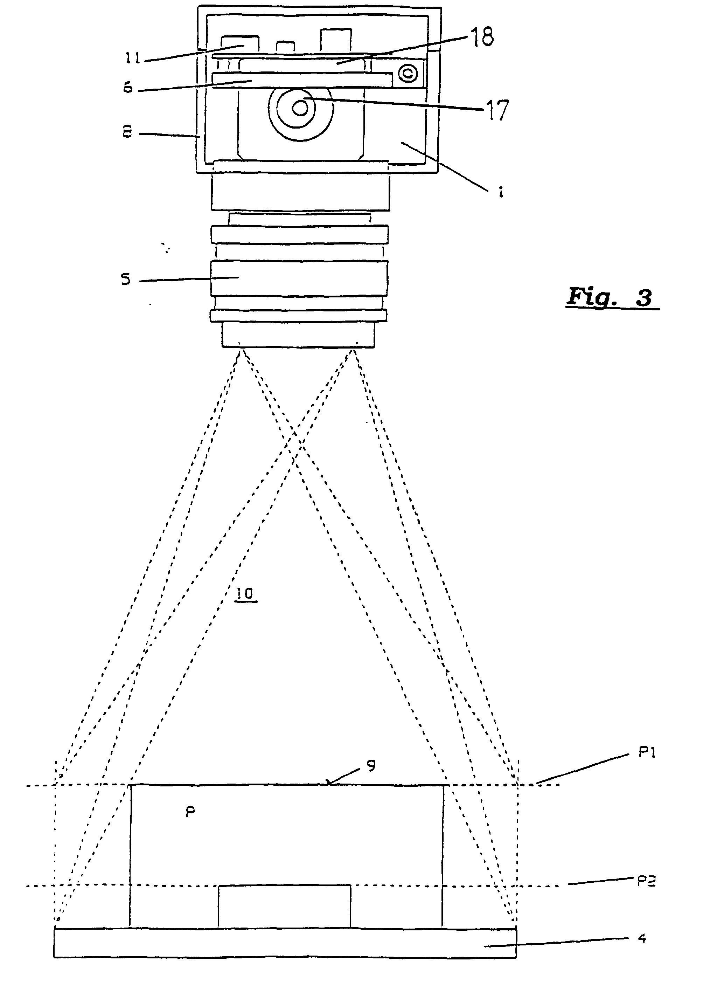

In Figur 3 ist der Strahlengang der optischen Abbildung von Paketen unterschiedlicher Höhe wiedergegeben. Dabei fällt die Schnittebene (=Papierebene) der Figur 3 mit der Abbildungsebene 10 der Videokamera 1 zusammen. Wie man erkennt, muß der Zeilensensor 6, welcher einerseits ein hohes Paket P1 in seiner gesamten Breite genau mit der gesamten Zeilenlänge erfassen will, in einem etwas anderen Abstand zur Linse 5 angeordnet werden, wenn ein gleich breiter Flächenbereich bei einem niedrigen Paket P2 scharf erfaßt werden soll. Aufgrund des sehr großen Abstandes der Kameralinse 5 zu der Paketoberfläche 9 im Vergleich zu dem relativ kleinen Abstand zwischen dem Bildsensor 6 und der Kameralinse 5, reicht bei dem Bildsensor 6 eine Höhenverschiebung in der Größenordnung von 1 - 2 mm aus, um alle Paketoberflächen 9 mit Flächenhöhen zwischen dem höchsten Paket P1 und dem niedrigsten Paket P2 scharf abzubilden. Bei einer gegebenen Position der Sensorzeile 6 ist die Schärfentiefe ausreichend groß, um Informationen auch von Oberflächen erfassen zu können, deren Abstand zur Kamera während des Durchlaufs durch die Abbildungsebene um einige cm variiert. Wenn die Kameraoptik keine Zoomoptik ist, so wird für niedrige Pakete, deren Oberfläche einen größeren optischen Abstand zu dem Kamerasensor 6 hat, für die Abbildung nicht die volle Zeilenlänge bzw. -Breite ausgenutzt Die Auflösung wird dadurch etwas reduziert, und die Zeilenfrequenz zur Erzielung derselben Auflösung in Vorschubrichtung wird entsprechend herabgesetzt.

Die für die optische Fokussierung vorgesehene Höhenverstelleinrichtung weist vorzugsweise eine Lagerplatte oder dergleichen für den Zeilensensor 6 auf, die um eine im Abstand zu dem Sensor und parallel zu der Sensorzeile verlaufende Achse schwenkbar gelagert ist. Die Platte wird durch einen Exzenterantrieb um diese Achse verkippt, wodurch sich der Abstand des Sensors von der Kameraoptik ändert. Die Lagerplatte oder dergleichen ist gegen den Exzenter vorgespannt, so daß die Position des Zeilensensors in jeder Exzenterstellung eindeutig definiert ist. Eine solche Einrichtung ist sehr robust, praktisch verschleißfrei und bei Verwendung beispielsweise eines Schrittmotors als Exzenterantrieb positioniergenau und reaktionsschnell. Die dabei auftretende geringe Verkippung des Zeilensensors um seine Längsachse hat dabei keinen Einfluß auf dessen Lichtempfindlichkeit in Richtung des einfallenden Lichtes.

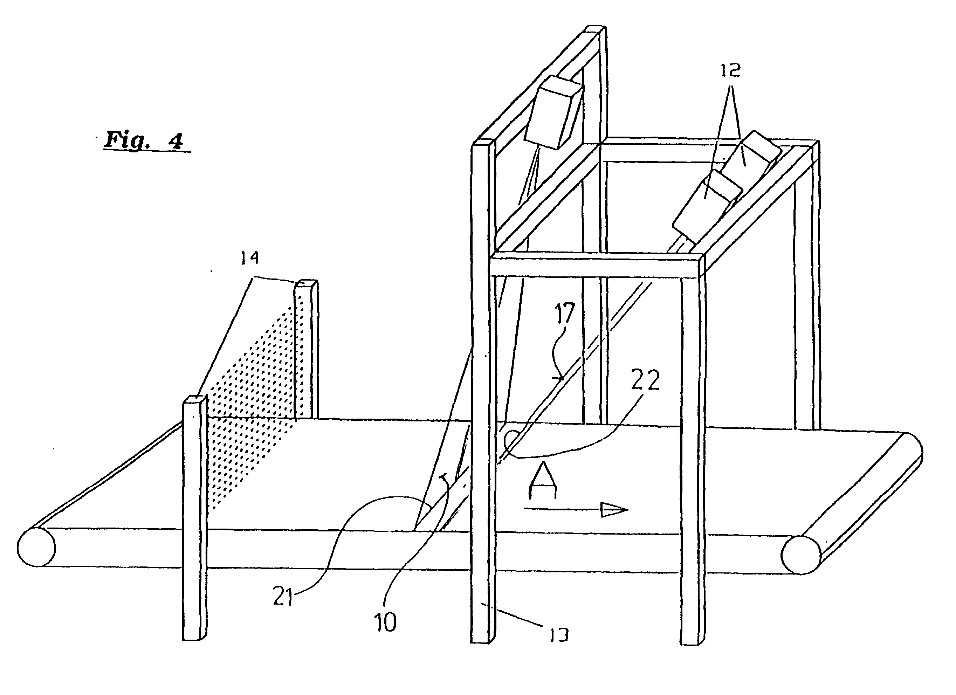

Figur 4 zeigt schematisch einen Teil einer Paketverteilungsanlage, bestehend aus einem Förderband 4, einer Höhenmeßeinrichtung 14 und einem Rahmen 13, an welchem die Kamera 1 und eine Beleuchtungseinrichtung 12 angebracht sind. Die Pakete werden auf das Förderband 4 aufgelegt und in Richtung des Pfeiles A transportiert. Dabei durchlaufen sie eine Höhenmeßeinrichtung 14, die zum Beispiel aus einer Vielzahl paralleler Lichtschranken bestehen kann. Aufgrund der gemessenen Höhe reagiert das Autofokussystem der Zeilenkamera 1 und stellt den Abstand des Bildsensors 6 so ein, daß die Ebene der oberen Oberfläche 9 des Paketes P scharf abgebildet wird.

Es versteht sich, daß statt der Lichtschrankenhöhenmeßeinrichtung zum Beispiel auch eine optische Triangulation, eine Ultraschall-, Radar- oder Infrarotmessung stattfinden kann, um den Abstand zwischen Paketoberfläche 9 und Kameraoptik 5 zu messen.

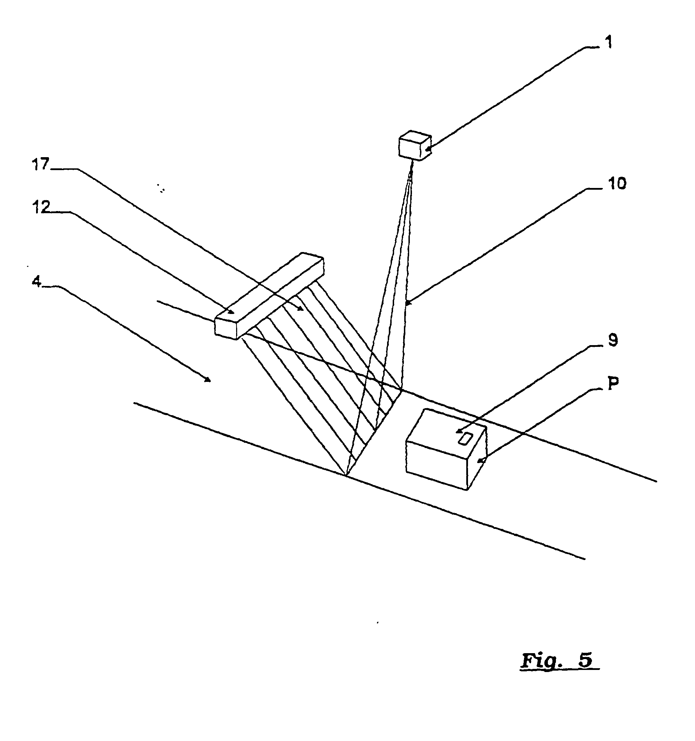

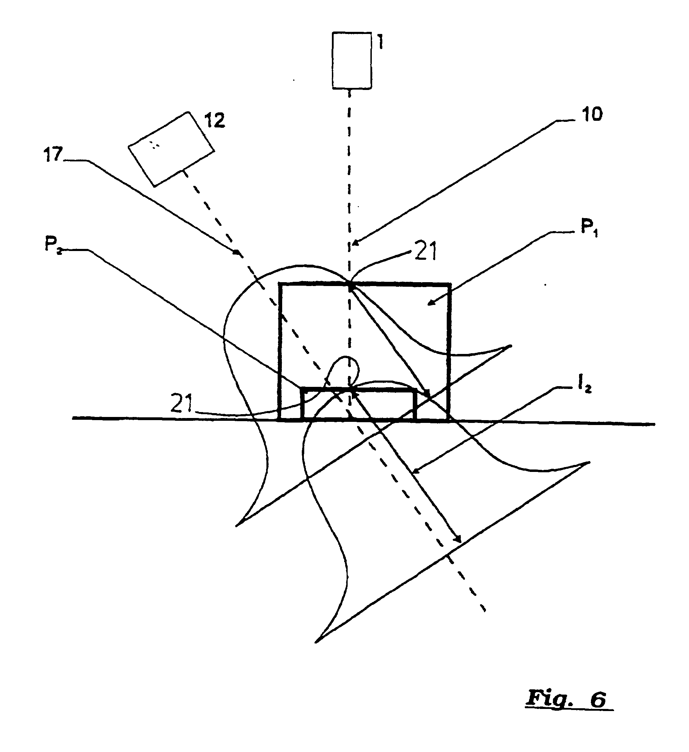

Die Beleuchtungseinrichtung 12 besteht aus einer im wesentlichen linienförmigen Lichtquelle bzw. einer linienförmig angeordneten Reihe von Punktstrahlern mit einer Fokussiereinrichtung, welche das Licht der Lichtquelle auf die Oberfläche der Pakete P lenkt, die von der Zeilenkamera erfaßt werden. Dabei kann die Beleuchtungseinrichtung 12 einen etwas geringeren Abstand zur Oberfläche des Transportbandes 4 und zur Oberfläche der Gegenstände P als die Kamera 1 haben. Konkret kann eine Beleuchtungseinrichtung mit der gewünschten Intensitätsverteilung durch zwei in geeignetem Abstand angeordnete Punktstrahler realisiert werden, deren Fokussiereinrichtung den Strahlern jeweils eine glockenförmige Intensitätsverteilung gibt. Entlang einer Parallelen zur Verbindungslinie der beiden Strahler addieren sich deren Intensitäten auf einen - in gleich bleibendem Abstand von dieser Linie - konstanten Wert. Die von der jeweiligen Achse der Strahler und Ihrer Verbindungslinie aufgespannte Ebene 17 ist eine Ebene maximaler Beleuchtungsintensität. Die beiden in Fig. 4 dargestellten Strahler sind getrennt justierbar, um die optimale Beleuchtung einstellen zu können. In Fig. 4 schneidet die Ebene 17 maximaler Beleuchtungsintensität das Färderband 4 entlang einer Linie 22, die, in Transportrichtung des Bandes gesehen, hinter der Schnittlinie 21 der Abbildungsebene 10 mit dem Förderband 4 liegt. Die genaue und wünschenswerte Ausrichtung dieser Ebenen 10, 17 wurde bereits erwähnt und wird im einzelnen noch im Zusammenhang mit den Figuren 5 und 6 erläutert.

In Figur 5 ist die Beleuchtungs- und Abbildungssituation nochmals schematisch dargestellt. Die Beleuchtungseinrichtung 12 kann zum Beispiel aus einer Reihe von Punktstrahlern bestehen, deren Licht fokussiert und nach unten auf das Transportband 4 gerichtet wird. Dort wo die oben definierte Ebene 17 eine Oberfläche 9 eines Gegenstandes schneidet, ist also die Beleuchtungsintensität auf dieser Oberfläche am stärksten. Entlang einer Linie parallel zu der Reihe von Punktstrahlern ist die Beleuchtungsintensität jeweils konstant Schon mit zwei parallel gerichteten Punktstrahlern, die um eine zentrale Achse herum eine glockenförmige Intensitätsverteilung haben und die in einem auf diese Intensitätsverteilung abgestimmten Abstand voneinander angeordnet werden, kann man die vorstehenden Bedingungen für die Beleuchtung in guter Näherung erfüllen.

Dabei wird die Ebene 17 so ausgerichtet, daß die Schnittlinie der Ebene 17 mit der Ebene des Transportbandes 4 möglichst genau entlang der von der Kamera 1 erfaßten Abbildungslinie verläuft, d.h. die erwähnte Schnittlinie fällt mit der Schnittlinie zwischen Abbildungsebene 10 und der Ebene 17 bzw. zwischen Abbildungsebene 10 und Transportbandoberfläche zusammen. Zu beiden Seiten der Ebene 17 maximaler Beleuchtungsintensität werden Oberflächen mit etwas geringerer Intensität beleuchtet. Wenn also ein Paket P über das Transportband 4 durch die Abbildungsebene 10 (und auch durch die Ebene 17 maximaler Beleuchtungsintensität) hindurch befördert wird, so fällt die Schnittlinie 22 zwischen der Oberfläche 9 des Paketes und der Ebene 17 nicht mit der Schnittlinie 21 der Oberfläche 9 und der Abbildungsebene 10 zusammen.

Entlang der Abbildungslinie 21 der Paketoberfläche 9, welche durch den Schnitt der Ebene 10 und der Ebene 9 gebildet wird, wird also die Paketoberfläche 9 schwächer belichtet als entlang der parallel verlaufenden Schnittlinie 22 zwischen der Paketoberfläche 9 und der Ebene 17 maximaler Intensität der Beleuchtung. Je höher das Paket P ist, desto größer wird der Abstand zwischen der Linie maximaler Beleuchtungsintensität und der Abbildungslinie 21 und dementsprechend läßt auch die Intensität der Beleuchtung der Abbildungslinie 21 mit zunehmender Höhe der Pakete nach. Weil jedoch andererseits der Abstand der Paketoberfläche zur Kamera 1 abnimmt, nimmt der lichtempfindliche Sensor 6 der Zeilenkamera entsprechend mehr Licht von der Abbildungslinie auf als bei einem größeren Abstand einer (mit gleicher Intensität beleuchteten) Abbildungslinie. Die Intensitätsabnahme der Beleuchtung bei höheren Paketen wird also durch den kürzeren Abstand zur Kamera mindestens teilweise kompensiert und es ist letztlich nur eine Frage der Neigung der Ebene 17 und der passend gewählten Fokussierung und Intensitätsverteilung relativ zu der Ebene 17, wenn man die Helligkeitsänderungen der Abbildungslinie bei unterschiedlichen Pakethöhe so variieren will, daß die scheinbare Helligkeit der Abbildungslinie für die Zeilenkamera unverändert bleibt, die Lichtsensoren der Kamera also pro Bildpunkt und Zeiteinheit bei identischen Oberflächen immer im wesentlichen dieselbe Menge an Lichtquanten aufnehmen, wenn der Abstand der Fläche von der Kamera in dem vorgesehenen Bereich verändert wird. Dabei können auch unterschiedliche Blendenöffnungszeiten der Kamera für unterschiedliche Auflösungen entlang der Transportrichtung mitberücksichtigt werden.

In Figur 6 ist diese Wirkungsweise der erfindungsgemäßen Beleuchtung nochmals schematisch wiedergegeben, wobei auch die Intensitätsverteilungen der Beleuchtung so eingezeichnet sind, daß sie jeweils an der Paketoberfläche durch die Abbildungslinie verlaufen. Dabei ist insbesondere zu beachten, daß an sich die Beleuchtungsintensität der Paketoberfläche mit zunehmendem Abstand der Paketoberfläche von der Beleuchtungseinrichtung 12 abnimmt, was jedoch zumindest für den Bereich der Abbildungslinie 21 im vorliegenden Fall dadurch überkompensiert wird, daß mit größerem Abstand der Paketoberfläche, wie im Falle der Paketoberfläche 2, die Abbildungslinie näher an das Intensitätsmaximum der Beleuchtung heranrückt. Die Abbildungslinie wird also mit zunehmendem Abstand von der Beleuchtungseinrichtung 12 und gleichzeitig mit zunehmendem Abstand von der Kamera 1 stärker beleuchtet, wie man in Figur 6 schematisch anhand der eingezeichneten Intensitätslinien 11 und 12 für die Beleuchtung der Oberflächen der verschiedenen Pakete P1 und P2 erkennt.

Es versteht sich, daß diese Art des Beleuchtungsverfahrens und die entsprechende Beleuchtungseinrichtung von den übrigen Merkmalen der vorliegenden Erfindung unabhängig sind und auch für völlig andere Anwendungszwecke eingesetzt werden können, wo es nicht auf die Erfassung von Informationen auf potentiell großen Oberflächen ankommt, zum Beispiel bei automatischen Verteil- und Sortieranlagen und optischen Erfassungseinrichtungen jeglicher Art.

## Patentansprüche

1. Verfahren zur Erfassung von auf Gegenständen aufgebrachten, optisch erfaßbaren Informationen, wobei zwecks Identifikation jeder der Gegenstände (P) in das Sichtfeld einer Videokamera (1) gebracht wird und die im Sichtfeld der Videokamera (1) erfaßten Informationen in ein Rechnersystem eingegeben werden, wobei als Videokamera eine hochauflösende Zeilenkamera verwendet wird, deren Zeilenlänge im Objektabstand die Maximalabmessung eines Gegenstandes (P) vollständig abdeckt und der Gegenstand (P) im wesentlichen quer zur Längserstreckung der Videobildzeile mit im wesentlichen kontinuierlicher Geschwindigkeit durch die Abbildungsebene hindurchbewegt wird, und wobei die Bilderfassungsfrequenz der Zeilenkamera (1) und die Vorschubgeschwindigkeit der Gegenstände (P) derart aufeinander abgestimmt werden, daß eine mit der Auflösung innerhalb der Zeile vergleichbare Größenordnung der Auflösung zwischen aufeinanderfolgenden Zeilen erreicht wird, **dadurch gekennzeichnet, daß** gleichzeitig mehrere Zeilenkameras (1) auf bzw. über mehreren Vorschubeinrichtungen (4) für die Gegenstände (P) die Oberflächen der Gegenstände (P) erfassen, wobei die Zeilenkameras (1) über ihre zugehörigen Sensorrechner und ein Netzwerk (21, 22) mit einem Leitrechner (2) und Eingabeterminals (3) verbunden sind, daß die erfaßten Videobilddaten der einzelnen Gegenstände (P) in der Reihenfolge der Erfassung ihrer Oberflächen mindestens teilweise komprimiert zwischengespeichert werden und auf Abruf in einem komprimierten Format mit verringerter Auflösung an die Eingabeterminals (3) weitergegeben, auf den Bildschirmen der Eingabeterminals (3) dargestellt und/oder in deren Rechnereinheit ausgewertet werden, und dadurch, daß ausgewählte Bereiche der Videobilddaten auf Abruf in voller Auflösung auf den Bildschirmen der Eingabeterminals (3) dargestellt werden.

2. Verfahren nach Anspruch 1, **dadurch gekennzeichnet, daß** Zeilenkameras mit mehr als 1000, vorzugsweise mehr als 3000 und insbesondere zum Beispiel 5000 oder 7000 Bildpunkten verwendet werden.

3. Verfahren nach Anspruch 1 oder 2, **dadurch gekennzeichnet, daß** der optische Abstand zwischen den Kameras (1) und den Gegenständen (P) auf mehr als das Zweifache, vorzugsweise auf mehr als das Drei- oder Vierfache der maximalen Breite der zu erfassenden Gegenstände eingestellt wird.

4. Verfahren nach einem der Ansprüche 1 bis 3, **dadurch gekennzeichnet, daß** zum Zwecke der Schärfeneinstellung die lichtempfindlichen Sensoren der Zeilenkameras relativ zu den Objektiven (5) der Videokameras (1) bewegt werden.

5. Verfahren nach einem der Ansprüche 1 bis 4, **dadurch gekennzeichnet, daß** aus den gespeicherten Videobilddaten eines Gegenstandes auf einem Terminal (3) ein mit optisch erfaßbaren Informationen versehener Ausschnitt (15, 16) der Oberfläche (9) des Gegenstandes (P) dargestellt wird.

6. Verfahren nach einem der Ansprüche 1 bis 5, **dadurch gekennzeichnet, daß** die Beleuchtungsintensität der Oberflächen (9) der Gegenstände (P) mit zunehmendem Abstand der Oberflächen (9) der Gegenstände (P) von den Videokameras gesteigert wird, und zwar derart, daß die in den Abbildungsebenen erfaßten Helligkeiten der von den Zeilenkameras faßten Oberflächenausschnitte in unterschiedlichen Abständen zu den Zeilenkameras (1) im wesentlichen konstant sind.

7. Verfahren nach Anspruch 6, **dadurch gekennzeichnet, daß** ein oder mehrere Beleuchtungselemente (12) verwendet werden, welche eine in etwa glockenförmige Helligkeitsverteilung in mindestens einer Schnittebene haben, wobei die zu der Schnittebene senkrechte Ebene, welche die Achse der glockenförmigen Verteilung enthält, die Abbildungsebenen in der Nähe der maximalen Objektabstände von den Zeilenkameras schneidet.

8. Verfahren nach Anspruch 7, **dadurch gekennzeichnet, daß** die Symmetrieebene der Intensitätsverteilung unter einem Winkel von mindestens 20° relativ zu den Abbildungsebenen angeordnet wird.

9. Verfahren nach einem der Ansprüche 1 bis 8, **dadurch gekennzeichnet, daß** die in Klarschrift und/oder Barcode auf der Oberfläche (9) eines Gegenstandes (P) aufgebrachten Informationen durch eine automatische Leseeinrichtung erfaßt und in das Rechnersystem (2, 3) eingegeben werden.

10. Verfahren nach Anspruch 4, oder einem der auf Anspruch 4 zurtickbezogenen Ansprüche, **dadurch gekennzeichnet, daß** die lichtempfindlichen Sensoren der Zeilenkameras um zu der Längserstreckung der Sensoren parallele Achsen verschwenkt werden.

11. Verwendung eines Verfahrens nach einem der Ansprüche 1 bis 10 in einer Paketverteilanlage.

12. Vorrichtung zur Erfassung von auf großflächigen Gegenständen aufgebrachten, optisch erfaßbaren Informationen mit Videokameras (1) und mit mindestens einer Eingabeeinrichtung (2, 3) für Informationen aus den von den Videokameras erfaßten Sichtfeldem, wobei als Videokameras hochauflösende Zeilenkameras vorgesehen sind, deren Kameraoptiken so ausgelegt bzw. angeordnet sind, daß die maximalen Breiten der Gegenstände, gesehen in Richtung der Zeilen, vollständig erfaßt werden, und wobei mehrere getrennte Vorschubeinrichtungen (4) vorgesehen sind, um die zu erfassenden Gegenstände quer zu den Zeilenrichtungen durch deren Abbildungsebenen hindurch mit im wesentlichen gleichförmiger Geschwindigkeit zu transportieren, wobei über den Vorschubeinrichtungen (4) jeweils eine Zeilenkamera (1) angeordnet ist, **dadurch gekennzeichnet, daß** die Zeilenkameras über ihre zugehörigen Sensorrechner und ein Netzwerk (21, 22) mit einem Leitrechner (2) und Eingabeterminals (3) verbunden sind, wobei die Vorrichtung Mittel zur Kompression der Bilddaten aufweist und eine Speichereinrichtung vorgesehen ist, welche die von den Zeilenkameras (1) erfaßten, vollständigen Bilder einer Gegenstandsoberfläche (9) in der Reihenfolge der Erfassung, zumindest teilweise komprimiert zwischenspeichert, wobei ein zentraler Leitrechner (2) die gespeicherten Bilder auf Abruf einzeln in der gespeicherten Reihenfolge an ein Terminal (3) übergibt.

13. Vorrichtung nach Anspruch 12, **dadurch gekennzeichnet, daß** die Bildwiederholfrequenzen der Zeilenkameras (1) und/oder die Transportgeschwindigkeiten der Vorschubeinrichtungen (4) aufeinander abgestimmt steuerbar sind.

14. Vorrichtung nach Anspruch 12 oder 13, **dadurch gekennzeichnet, daß** die Zeilenkameras (1) neben oder oberhalb der Transportbänder (4) in einem optischen Abstand von mehr als dem Zweifachen, vorzugsweise von mehr als dem Vierfachen der maximalen Breite der zu erfassenden Gegenstände (P) angeordnet sind.

15. Vorrichtung nach einem der Ansprüche 12 bis 14, **dadurch gekennzeichnet, daß** die von den Zeilenrichtungen der Zeilenkameras (1) und Verbindungslinien Objekt-Zeilenkamera aufgespannten Abbildungsebenen (10) vorzugsweise in Vorschubrichtung einen kleinen Winkel mit den Senkrechten zu den Bandebenen bilden.

16. Vorrichtung nach einem der Ansprüche 12 bis 15, **dadurch gekennzeichnet, daß** Beleuchtungseinrichtungen (12) vorgesehen sind, welche angenähert linienförmige Lichtquellen haben, deren Licht durch Fokussiereinrichtungen gebündelt wird, wobei jeweils eine Ebene maximaler Lichtintensität sowohl zur Ebene der Vorschubrichtung als auch zur Abbildungsebene (10) der Zeitenkameras (1) geneigt verläuft

17. Vorrichtung nach Anspruch 16, **dadurch gekennzeichnet, daß** die Beleuchtungseinrichtungen (12) bzw. deren Fokussiereinrichtungen und Lichtquellen derart angeordnet sind, daß die Ebenen (17) maximaler Lichtintensität die Bildebenen (10) auf den Oberflächen der Gegenstände auf den Transporteinrichtungen (4) oder darüber schneiden.

18. Vorrichtung nach Anspruch 17, **dadurch gekennzeichnet, daß** die Winkel zwischen den Abbildungsebenen (10) und den Ebenen (17) maximaler Lichtintensität mindestens 10° und höchstens 50° betragen.

19. Vorrichtung nach einem der Ansprüche 12 bis 18, **dadurch gekennzeichnet, daß** das Datennetzwerk ein ATM-Netzwerk oder ein 100 Mbit Ethemet (22), vorzugsweise mit einem "Switching Hub" als Schaltknoten, ist.

20. Vorrichtung nach einem der Ansprüche 12 bis 19, **dadurch gekennzeichnet, daß** die Anzahl der Eingabeterminals größer ist als die Anzahl der Zeilenkameras, wobei jedes Terminal mit jeder Zeilenkamera verbindbar ist.

21. Vorrichtung nach einem der Ansprüche 12 bis 19, **dadurch gekennzeichnet, daß** die Anzahl der Eingabeterminals kleiner ist als die Anzahl der Zeilenkameras oder gleich dieser Anzahl ist, wobei jedes Terminal mit jeder Zeilenkamera verbindbar ist.

22. Vorrichtung nach einem der Ansprüche 12 bis 21, **dadurch gekennzeichnet, daß** jedes Terminal Einrichtungen zur manuellen Eingabe von Informationsdaten aufweist.

23. Vorrichtung nach einem der Ansprüche 12 bis 22, **dadurch gekennzeichnet, daß** Einrichtungen zum Herstellen einer Ausschnittvergrößerung für den Informationen enthaltenden Bereich einer Gegenstandsoberfläche (9) vorgesehen sind.

24. Vorrichtung nach einem der Ansprüche 12 bis 23, **dadurch gekennzeichnet, daß** Einrichtungen zum automatischen Erfassen der Informationsdaten und zum Anzeigen der automatisch erfaßten Daten vorgesehen sind.

25. Vorrichtung nach einem der Ansprüche 12 bis 24, **dadurch gekennzeichnet, daß** die den Sensor der Zeilenkamera tragenden Elemente um zu den Achsen bzw. linearen Erstreckungen der Sensoren parallelen Achsen schwenkbar gelagert sind.

26. Vorrichtung nach Anspruch 25, **dadurch gekennzeichnet, daß** an den die Sensoren tragenden Elementen angreifende Exzenter vorgesehen sind, durch welche die Elemente in unterschiedliche Schwenkstellungen bewegbar sind.

27. Vorrichtung nach Anspruch 26, **dadurch gekennzeichnet, daß** an den die Sensoren tragenden Elementen den Exzentern entgegenwirkende Vorspannfedem angreifen.

## Claims

1. A method for capturing optically capturable information on articles, each article (P) being brought into the field of view of a video camera (1) for the purposes of identification and the information captured from the field of view of the video camera (1) being inputted into a computer system, wherein a high resolution line camera is used as the video camera, the line length of which completely covers the maximum dimension of an article (P) at the object distance, and wherein the article is moved at a substantially continuous speed through the image plane substantially transversely to the longitudinal extent of the video picture line, and wherein the picture scanning frequency of the line camera (1) and the forward speed of the articles (P) are so co-ordinated that the resolution within the lines is of comparable magnitude to the resolution between successive lines, **characterized in that** a plurality of line cameras (1) provided on or over a plurality of conveying means (4) for the articles (P) simultaneously capture the surfaces of articles (P), the line cameras (1) being connected to a master computer (2) and input terminals (3) via their sensor processors and a network (21, 22), **in that** the captured video data of individual articles (P) are buffer stored in an at least partially compressed manner in the order in which their surfaces have been captured and are displayed on request in a compressed format with reduced resolution at the input terminals (3) and/or are analyzed in the computer unit, and **in that** selected regions of the video data are displayed on request on the input terminal screens (3) at full resolution.

2. A method according to claim 1, **characterized in that** the line cameras have more than 1000, preferably more than 3000 and in particular 5000 or 7000 picture elements.

3. A method according to claim 1 or claim 2, **characterized in that** the optical distance between the cameras (1) and the articles (P) is more than twice, preferably more than three or four times the maximum width of the articles to be captured.

4. A method according to one of claims 1 to 3, **characterized in that** the light-sensitive sensors of the line cameras are moved relative to the objectives (5) of the video cameras (1) in order to adjust the focus.

5. A method according to one of claims 1 to 4, **characterized in that** the stored video data for an article is used to display at a terminal (3) a section (15, 16) of the surface (9) of the article (P) which contains optically capturable information.

6. A method according to one of claims 1 to 5, **characterized in that** the illumination intensity at the surfaces (9) of the articles (P) is elevated with increasing distance of the surfaces of the articles (9) from the video cameras, so that the brightness captured in the image plane of the section of the surface captured by the line cameras is essentially constant for different distances from the line cameras (1).

7. A method according to claim 6, **characterized in that** one or more illumination elements (12) are used which have an approximately bell-shaped brightness distribution in at least one plane, in which the plane at right angles to that plane, which contains the axis of the bell shaped distribution, cuts the image plane close to the maximum object distance from the line camera.

8. A method according to claim 7, **characterized in that** the plane of symmetry of the intensity distribution is at an angle of at least 20° relative to the image plane.

9. A method according to any one of claims 1 to 8, **characterized in that** the plain script and/or barcode information on the surface (9) of an article (P) is captured by an automatic reading means and inputted into the computer system (2, 3).

10. A method according to claim 4 or a claim dependent on claim 4, **characterized in that** the light-sensitive sensors of the line cameras are rotated about axes which are parallel to the longitudinal extent of the sensors.

11. Use of a method according to any one of claims 1 to 10 in a mail routing station.

12. An apparatus for capturing optically capturable information from articles with extensive surfaces using video cameras (1) and with at least one means (2, 3) for inputting information captured from the fields of view of the video cameras, wherein the video cameras are high resolution line cameras with camera optics which are so designed or arranged that the maximum width of the articles, seen in the line direction, is completely captured, and wherein a plurality of separated conveying means (4) are provided to transport the articles to be captured transversely to the line direction through its image plane at a substantially uniform speed, wherein a line camera (1) is mounted over each conveying means (4), **characterized in that** the line cameras are connected to a master computer (2) and input terminals (3) via their sensor processors and a network (21, 22) and wherein the apparatus has means for compressing video data and a storage means, whereby the complete images of an article surface (9) captured by the line cameras (1) are buffer stored in the order in which they are captured in an at least partially compressed manner, whereby on request, a master computer (2) transfers stored images to a terminal (3) individually in the order of storage.

13. An apparatus according to claim 12, **characterized in that** the picture scanning frequency of the line cameras (1) and/or the transport speed of the conveying means (4) are mutually co-ordinatedly controllable.

14. An apparatus according to claim 12 or claim 13, **characterized in that** the line cameras (1) are arranged beside or above the conveyor belt (4) at an optical distance of more than twice, preferably more than four times the maximum width of the articles (P) to be captured.

15. An apparatus according to one of claims 12 to 14, **characterized in that** the image plane (10) defined by the line direction of the line cameras (1) and a line connecting the object to the line camera preferably forms a slight angle with the perpendicular to the belt plane in the transport direction.

16. An apparatus according to one of claims 13 to 16, **characterized in that** illuminating means (12) are provided which have approximately linear light sources, the light therefrom being concentrated by a focusing means, wherein for each source a plane of maximum luminous intensity is produced which is inclined to both the plane of the conveying means and to the image plane (10) of the line camera (1).

17. An apparatus according to claim 16, **characterized in that** the illuminating means (12) or its focusing means and light source are arranged so that the planes (17) of maximum luminous intensity cut the image plane (10) at the surface of the articles on the conveying means (4) or thereabove.

18. An apparatus according to claim 17, **characterized in that** the angles between the image planes (10) and the planes (17) of maximum luminous intensity are at least 10° and at most 50°.

19. An apparatus according to one of claims 12 to 18, **characterized in that** the network is an ATM network or a 100 Mbit ethemet (22), preferably with a switching hub.

20. An apparatus according to one of claims 12 to 19, **characterized in that** the number of input terminals is larger than the number of line cameras, wherein each terminal can be connected to each line camera.

21. An apparatus according to one of claims 12 to 19, **characterized in that** the number of input terminals is smaller than or equal to the number of line cameras, wherein each terminal can be connected to each line camera.

22. An apparatus according to one of claims 12 to 21, **characterized in that** each terminal is provided with means for manual input of data.

23. An apparatus according to one of claims 12 to 22, **characterized in that** means are provided for selectively enlarging the region of the surface (9) of an article containing information.

24. An apparatus according to any one of claims 12 to 23, **characterized in that** means are provided for automatic capture of information and for displaying the automatically captured data.

25. An apparatus according to one of claims 12 to 24, **characterized in that** the elements carried by the sensors of the line cameras are rotatably mounted about the axes of the sensors or about axes parallel to the longitudinal extent of the sensors.

26. An apparatus according to claim 25, **characterized in that** cams are provided which bear on the elements carried by the sensors, by means of which the elements can be rotated into different positions.

27. An apparatus according to claim 26, **characterized in that** biasing springs on the elements carried by the sensors bear against the cams.

## Revendications

1. Procédé de détection d'informations détectables par des moyens optiques et déposées sur des objets, dans lequel chacun des objets (P) est placé dans le champ visuel d'un caméra vidéo (1) dans un but d'identification, on utilise comme caméra vidéo (1) une caméra à lignes de haute résolution dont la longueur des lignes recouvre totalement à distance de l'objet la dimension maximale d'un objet (P) et l'objet (P) est déplacé sensiblement transversalement à l'extension longitudinale de la ligne de balayage vidéo à une vitesse sensiblement continue dans le plan de représentation, et la fréquence de détection d'image de la caméra à lignes (1) et la vitesse de progression des objets (P) sont adaptées l'une à l'autre de sorte que l'on obtient un ordre de grandeur de la résolution entre des lignes successives qui est comparable à la résolution à l'intérieur de la ligne, **caractérisé en ce que** plusieurs caméras à lignes (1), placées sur plusieurs dispositifs (4) d'avance des objets (P) ou au-dessus, détectent simultanément la surface des objets (P), les caméras à lignes (1) étant reliées à un ordinateur pilote (2) et à des terminaux d'entrée (3) par l'intermédiaire d'un calculateur de capteur associé et d'un réseau (21, 22), les données d'image vidéo détectées des objets individuels (P) sont stockées dans une mémoire intermédiaire dans l'ordre de la détection de la surface de ces objets et étant au moins partiellement compressées, et sont reproduites sur requête au niveau des terminaux d'entrée (3) dans un format compressé avec une faible résolution, représentées sur l'écran des terminaux d'entrée (3) et/ou exploitées dans l'unité de calcul de ces terminaux d'entrée, et des zones choisies des données d'image vidéo sont représentées sur requête à pleine résolution sur les écrans des terminaux d'entrée (3).

2. Procédé selon la revendication 1, **caractérisé en ce que** l'on utilise des caméras à lignes comportant plus de 1000, avantageusement plus de 3000 et en particulier par exemple 5000 ou 7000 points d'image.

3. Procédé selon la revendication 1 ou 2, **caractérisé en ce que** la distance optique entre les caméras (1) et les objets (P) est réglée sur plus du double, avantageusement plus du triple ou du quadruple de la largeur maximale des objets à détecter.

4. Procédé selon l'une des revendications 1 à 3, **caractérisé en ce que** les capteurs photosensibles des caméras à lignes sont déplacés par rapport aux objectifs (5) des caméras vidéo (1) afin de régler la netteté.

5. Procédé selon l'une des revendications 1 à 4, **caractérisé en ce qu'**une portion (15, 16) de la surface (9) de l'objet (P), laquelle comporte des informations détectées par des moyens optiques, est représentée sur un terminal (3) sur la base des données d'image vidéo mémorisées d'un objet.

6. Procédé selon l'une des revendications 1 à 5, **caractérisé en ce que** l'on augmente l'intensité d'éclairement des surfaces (9) des objets (P) à mesure que la distance entre la surface (9) des objets (P) et les caméras vidéo augmente, c'est-à-dire de telle sorte que les luminosités, détectées dans les plans de représentation, des portions de surface détectées par les caméras à différentes distances par rapport aux caméras à lignes (1) sont sensiblement constantes.

7. Procédé selon la revendication 6, **caractérisé en ce que** l'on utilise un ou plusieurs éléments d'éclairement (12) qui présentent une distribution de luminosité sensiblement en forme de cloche dans au moins un plan de coupe, le plan perpendiculaire au plan de coupe et contenant l'axe de la distribution en forme de cloche coupant les plans de représentation à proximité des distances d'objet maximales par rapport aux caméras à lignes.

8. Procédé selon la revendication 7, **caractérisé en ce que** le plan de symétrie de la distribution d'intensité est disposé avec un angle d'au moins 20° par rapport aux plans de représentation.

9. Procédé selon l'une des revendications 1 à 8, **caractérisé en ce que** les informations déposées en clair et/ou sous forme de codes à barres sur la surface (9) d'un objet (P) sont détectées par un dispositif de lecture automatique et saisies dans le système informatique (2, 3).

10. Procédé selon la revendication 4, ou l'une des revendications dépendantes de la revendication 4, **caractérisé en ce que** les capteurs photosensibles des caméras à lignes basculent autour d'axes parallèles à l'extension longitudinale des capteurs.

11. Application d'un procédé selon l'une des revendications 1 à 10 à une installation de distribution de paquets.

12. Dispositif de détection d'informations détectables par des moyens optiques et déposées sur des objets de grande surface au moyen de caméras vidéo (1) et au moyen d'un dispositif (2, 3) de saisie d'informations constituées de zones visibles détectées par les caméras vidéo, dans lequel il est prévu comme caméras vidéo des caméras à lignes de résolution élevée dont les optiques sont étudiées ou disposées de telle sorte que la largeur maximale des objets, vus dans la direction des lignes, est totalement détectée et plusieurs dispositifs d'avance séparés (4) sont prévus pour transporter les objets détectés transversalement à la direction des lignes dans leurs plans de représentation à une vitesse sensiblement uniforme, une caméra à lignes (1) étant disposée au-dessus de chacun des dispositifs d'avance (4), **caractérisé en ce que** les caméras à lignes sont reliées à un ordinateur pilote (2) et à des terminaux d'entrée (3) par l'intermédiaire de calculateurs de capteurs associés et d'un réseau (21, 22), le dispositif comportant des moyens de compression des données d'image et un dispositif de mémorisation étant prévu pour stocker les images complètes d'une surface d'objet (9), qui ont été détectées par les caméras à lignes (1), dans une mémoire intermédiaire dans l'ordre de la détection et qui sont au moins partiellement compressées, un ordinateur pilote central (2) transmettant sur requête à un terminal (3) les images mémorisées individuellement dans l'ordre en mémoire.

13. Dispositif selon la revendication 12, **caractérisé en ce que** les fréquences de reproduction d'images des caméras à lignes (1) et/ou la vitesse de transport des dispositifs d'avance (4) sont commandées de façon coordonnée.

14. Dispositif selon la revendication 12 ou 13, **caractérisé en ce que** les caméras à lignes (1) sont disposées à côté ou au-dessus des bandes de transport (4) à une distance optique de plus du double, avantageusement de plus du quadruple de la largeur maximale des objets à détecter (P).

15. Dispositif selon l'une des revendications 12 à 14, **caractérisé en ce que** les plans de représentation (10) passant par les directions des lignes des caméras à lignes (1) et les lignes de liaison objets/caméras à lignes forment avantageusement dans la direction d'avance un petit angle par rapport à la perpendiculaire aux plans des bandes.

16. Dispositif selon l'une des revendications 12 à 15, **caractérisé en ce que** des dispositifs d'éclairement (12) sont prévus qui comportent des sources lumineuses à peu près linéaires dont la lumière est focalisée par des dispositifs de focalisation, un plan d'intensité maximale s'étendant de façon inclinée aussi bien par rapport au plan de la direction d'avance que par rapport au plan de représentation (10) des caméras à lignes (1).

17. Dispositif selon la revendication 16, **caractérisé en ce que** les dispositifs d'éclairement (12) ou leur dispositif de focalisation et leur source lumineuse sont disposés de telle sorte que les plans (17) d'intensité lumineuse maximale coupent les plans d'image (10) sur les surfaces des objets placés sur les dispositifs de transport (4) ou au-dessus de ceux-ci.

18. Dispositif selon la revendication 17, **caractérisé en ce que** les angles entre les plans de représentation (10) et les plans (17) d'intensité maximale sont au moins de 10° et au plus de 50°.

19. Dispositif selon l'une des revendications 12 à 18, **caractérisé en ce que** le réseau de données est un réseau ATM ou "Ethernet" de 100 Mbits (22), comportant avantageusement un concentrateur de commutation comme noeud de commutation.

20. Dispositif selon l'une des revendications 12 à 19, **caractérisé en ce que** le nombre de terminaux d'entrée est supérieur au nombre des caméras à lignes, chaque terminal pouvant être relié à chaque caméra à lignes.

21. Dispositif selon l'une des revendications 12 à 19, **caractérisé en ce que** le nombre des terminaux d'entrée est inférieur ou égal au nombre des caméras à lignes, chaque terminal pouvant être relié à chaque caméra à lignes.

22. Dispositif selon l'une des revendications 12 à 21, **caractérisé en ce que** chaque terminal comporte des dispositifs de saisie manuelle de données d'information.

23. Dispositif selon l'une des revendications 12 à 22, **caractérisé en ce qu'**il est prévu des dispositifs de réalisation d'un agrandissement de portions pour les zones d'une surface d'objet (9) contenant des informations.

24. Dispositif selon l'une des revendications 12 à 23, **caractérisé en ce qu'**il est prévu des dispositifs de détection automatique des données d'information et de présentation des données détectées automatiquement.

25. Dispositif selon l'une des revendications 12 à 24, **caractérisé en ce que** les éléments supportant le capteur des caméras à lignes sont montés de façon à pouvoir pivoter autour d'axes parallèles aux axes ou aux extensions linéaires des capteurs.

26. Dispositif selon la revendication 25, **caractérisé en ce que** des excentriques coopèrent avec les éléments supportant les capteurs et permettent de déplacer les éléments dans différentes positions de pivotement.

27. Dispositif selon la revendication 26, **caractérisé en ce que** des ressorts de précontrainte s'opposant aux excentriques coopèrent avec les éléments supportant les capteurs.
